# EUROPEAN PATENT APPLICATION

(11) **EP 4 841 211 A1**
(43) Date of publication of application: **18.11.2026**
(21) Application number: 26178807.9
(22) Date of filing: 14.05.2026
(51) Int. Cl.: G01B 11/275, B60W 50/00, F16M 11/04, F16M 11/42, G01S 7/497

(54) **APPARECCHIO DI CALIBRAZIONE DI SISTEMI AVANZATI DI ASSISTENZA ALLA GUIDA**

(30) Priority: 15.05.2025 IT 202500002104 U
(71) Applicant: Texa S.p.A., 31050 Monastier di Treviso (TV) (IT)
(72) Inventor: VIANELLO, Bruno, 31050 MONASTIER DI TREVISO (TV) (IT)
(74) Representative: Studio Torta S.p.A.

(57) **Abstract**

ADAS calibration apparatus (1) comprising a support assembly (5) and a bar (6) extending along a horizontal axis (B) and consisting of two arms (10) which are independent and separable from one another, and are configured in order to be manually coupled by an operator to the support assembly (5) between: a first operating configuration, wherein the two arms (10) are connected to the support assembly (5) via connecting members (11), so that they are arranged horizontally and each has a second axial end (10a) adjacent to the second axial end (10a) of the other arm (10), and a second operating configuration, wherein the two arms (10) are connected to the support assembly (5) via the connecting members (11), such that they are arranged vertically.

## Description

### CROSS-REFERENCE TO RELATED PATENT APPLICATIONS

This application claims priority from Italian Utility Model Application No. 202025000002104 filed on 15 May 2025, the contents of which are incorporated herein by reference.

### TECHNICAL FIELD

This invention relates to a calibration apparatus for advanced driver assistance systems in motor vehicles.

In particular, this invention relates to a horizontal sliding bar for a calibration device, which consists of two modular sliding arms designed to be independent and separate from one another in order to enhance the ease of use of the calibration device; to which the following discussion will make explicit reference without, however, losing its general applicability.

### STATE OF THE ART

There are known calibration apparatus for advanced driver assistance systems (ADAS) in motor vehicles, commonly referred to as ADAS calibration devices, which are configured to perform calibration operations or functions on the ADAS devices mounted in the motor vehicle.

Some ADAS calibration apparatus comprise: a lower base, a support frame fitted with a vertical column mounted on the base, a support assembly coupled to the vertical column to move vertically, a horizontal slide rail, and an ADAS calibration device mounted in order to move along the slide rail.

The Applicant has found that the above-mentioned sliding bar may represent a cumbersome component of an ADAS calibration apparatus. In particular, the length of the bar is considerable and contributes significantly to the horizontal overall dimensions of the ADAS calibration apparatus. The increased space requirement resulting from the bar may be disadvantageous, especially when the ADAS calibration apparatus is to be handled, moved and/or transported by transport means having limited available storage space.

### DESCRIPTION OF THE INVENTION

The aim of this invention is therefore to provide an ADAS calibration device featuring a sliding bar that is more convenient for transporting the device.

In accordance with this objective, the present invention provides an ADAS calibration device as set out in the independent claim and, preferably but not necessarily, in any of the claims dependent thereon.

The claims describe preferred embodiments of the present invention and form an integral part of this description.

### BRIEF DESCRIPTION OF THE DRAWINGS

This invention will now be described with reference to the accompanying drawings, which illustrate a non-limiting example of its implementation, in which:
- Figure 1 is a perspective view of an ADAS calibration apparatus made in accordance with the provisions of this invention in a first operating configuration,
- Figure 2 is a front elevation view of the ADAS calibration device shown in Figure 1,
- Figure 3 is a front elevation view of the ADAS calibration apparatus shown in Figure 1 in a second first operating configuration,
- Figure 4 is an enlarged scale front elevation view of an arm of the ADAS calibration apparatus shown in Figure 1,
- Figure 5 is an enlarged-scale front elevational view of an arm of the bar of the ADAS calibration apparatus shown in Figure 3,
- Figure 6 is a perspective view, with portions illustrated on an enlarged scale, of an arm of the bar of the ADAS calibration apparatus of Figure 1,
- Figure 7 is an enlarged-scale detail view of the arm shown in Figure 6.

### PREFERRED METHODS OF IMPLEMENTING INVENTION

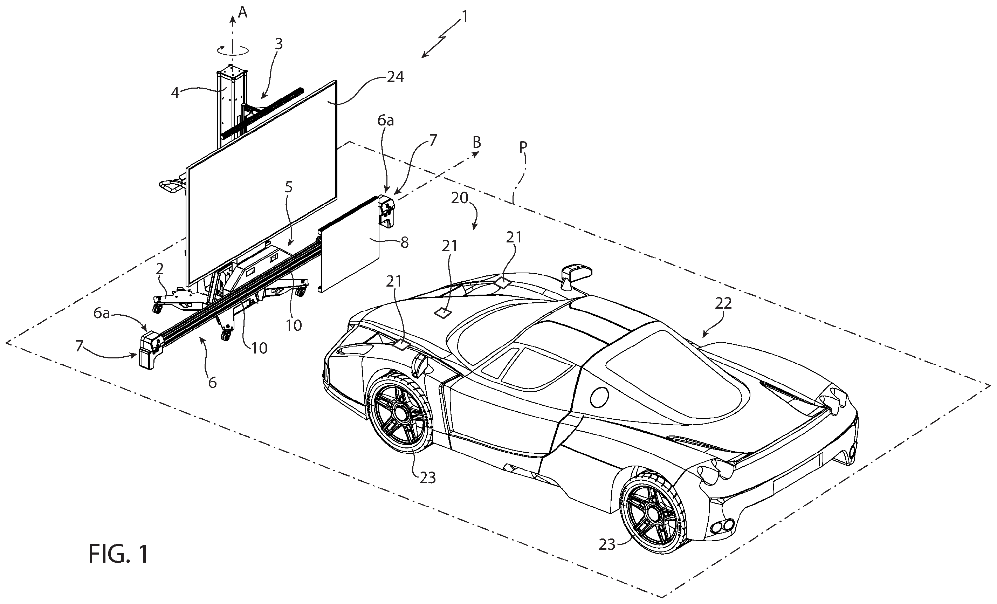

With reference to Figures 1, 2 and 3, the number 1 refers to an ADAS calibration apparatus as a whole. The ADAS calibration apparatus 1 is configured to perform a calibration of one or more ADAS electronic devices 20 comprised in an ADAS system 21 mounted in a vehicle 22, for example a motor vehicle.

It is also understood that the ADAS 20 electronic device of vehicle 22 may comprise any device, assembly or sensor commonly found in a vehicle's advanced driver-assistance system. For example, the ADAS 20 electronic devices of vehicle 22 may comprise, as appropriate: a radar sensor, an optical sensor, a camera, a LIDAR sensor, an ultrasonic sensor, an infrared (IR) sensor, or any similar sensor. It is also understood that, in the context of the following discussion, the function of 'calibration' (and/or recalibration) performed by the calibration method is intended to include, in addition to and/or as an alternative to 'calibration', an 'alignment' (or re-alignment) of an ADAS sensor.

In addition and/or alternatively, the ADAS calibration apparatus 1 may be configured to perform a determination of the wheel alignment of the wheels 23 of the vehicle 22. The ADAS calibration apparatus 1 may determine the wheel alignment of the wheels 23 using targets (not shown) mounted on the wheels 23 based on the determination or measurement of at least the alignment angles characterising the wheels 23 of the vehicle 22. The characteristic alignment angles used to determine the alignment of the wheels 23 may include one or more of the following characteristic angles: the caster angle, the camber angle and the toe angle.

With reference to the exemplary embodiment shown in Figures 1-3, the ADAS calibration apparatus 1 comprises a bottom base 2 arranged on a support plane P, preferably via wheels, and at least one support structure or frame 3, which is coupled/connected to the base 2 and extends in a cantilevered manner above it. The frame 3 is provided with a central column 4 extending along a substantially vertical reference axis A and mounted, at a lower end thereof, on the base 2. According to a preferred embodiment, the column 4 is rotatably coupled to the lower base 3 so as to be rotatable about the axis A relative to the base 3.

The ADAS calibration apparatus 1 also comprises a support assembly 5 which is coupled to column 4 in order to move along the axis A towards and away from the lower base 2. The ADAS calibration apparatus 1 further comprises at least one ADAS calibration device 8 and a rectilinear bar 6 extending along an axis B substantially orthogonal to the axis A. Bar 6 is provide with guides 9 configured to allow the ADAS calibration device 8 of the ADAS calibration apparatus 1 to slide horizontally along it. Bar 6 is coupled to the support assembly 5 in order to be supported by it. The ADAS calibration apparatus 1 also comprises a pair of vision units 7 mounted on the two opposite axial ends 6a of the bar 6, and at least one calibration device 8. The calibration device 8 is coupled to the bar 6 in order to be moved along axis B. The calibration device 8 is coupled to the bar 6 via one or more guides 9 which extend horizontally along the bar 6. Conveniently, the guides 9 extend along the bar 6 between its opposite ends 6a.

According to the present invention, bar 6 consists of two independent and separated arms 10. Conveniently, bar 6 consists solely of the two arms 10. Bar 6 is therefore divided into two parts which form the two arms 10, preferably of the same length. The two arms 10 are each provided with respective portions or sections of guide 9.

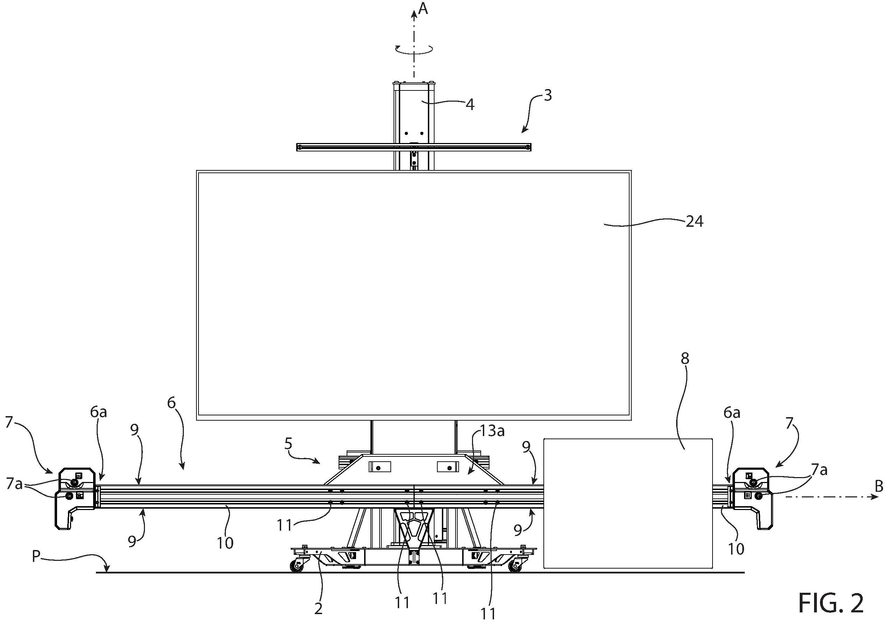

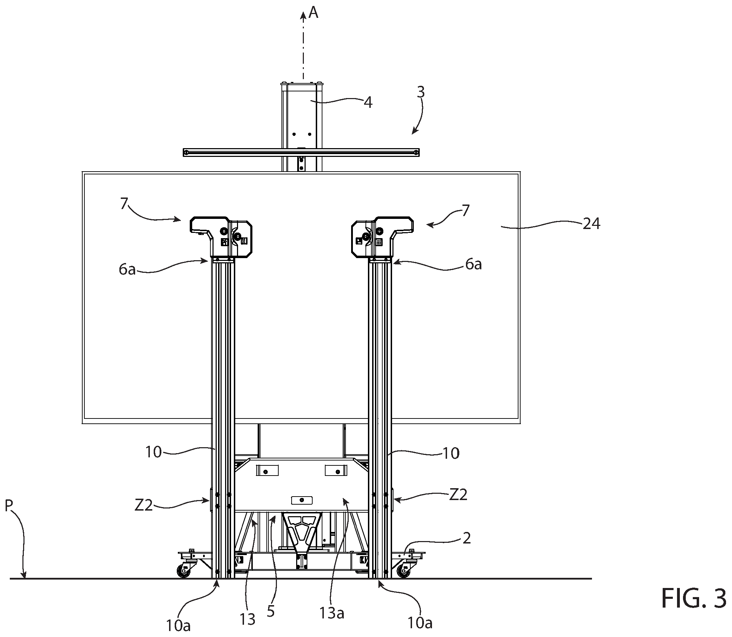

The two arms 10 are configured so as to be manually coupled by an operator to the support assembly 5 in a first operating configuration having a maximum overall size (shown in Figures 1 and 2) and, alternatively, in a second operating configuration having a minimum overall size (shown in Figure 3).

In the first operating configuration shown in Figures 1 and 2, the two arms 10 are fixed by the operator to the support assembly 5 using manual connecting elements 11, so that they are arranged coaxially with the B-axis to form the horizontal bar 6.

In the first operating configuration shown in Figures 1 and 2, the two arms 10 each have an axial end 10a adjacent to the axial end 10a of the other arm 10 in order to form one or more substantially continuous guides 9 between the ends 6a.

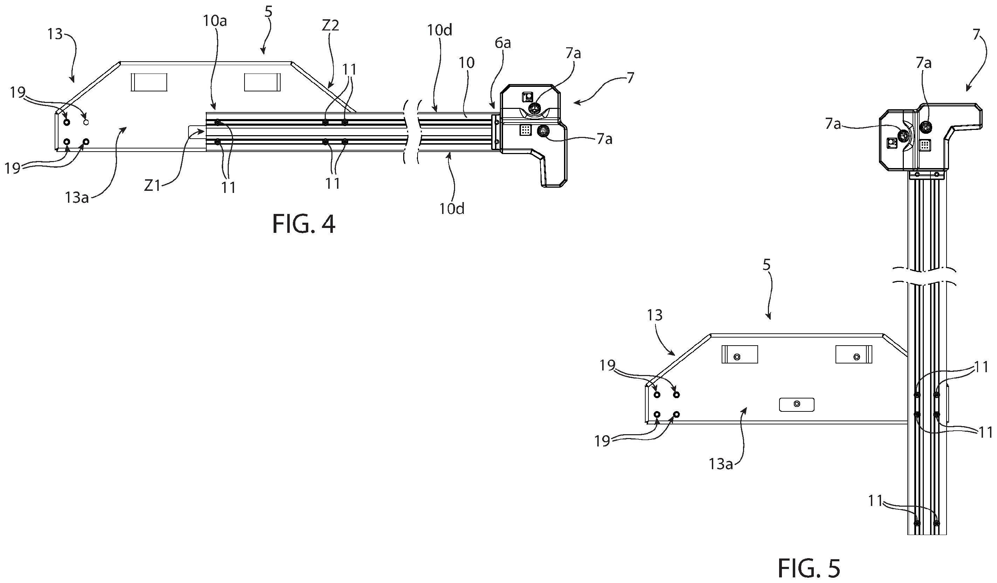

In the second operating condition shown in Figures 3 and 5, the two arms 10 are fixed to the support assembly 5 via the connecting members 11, such that they are arranged parallel to axis A; that is, they are arranged approximately vertically.

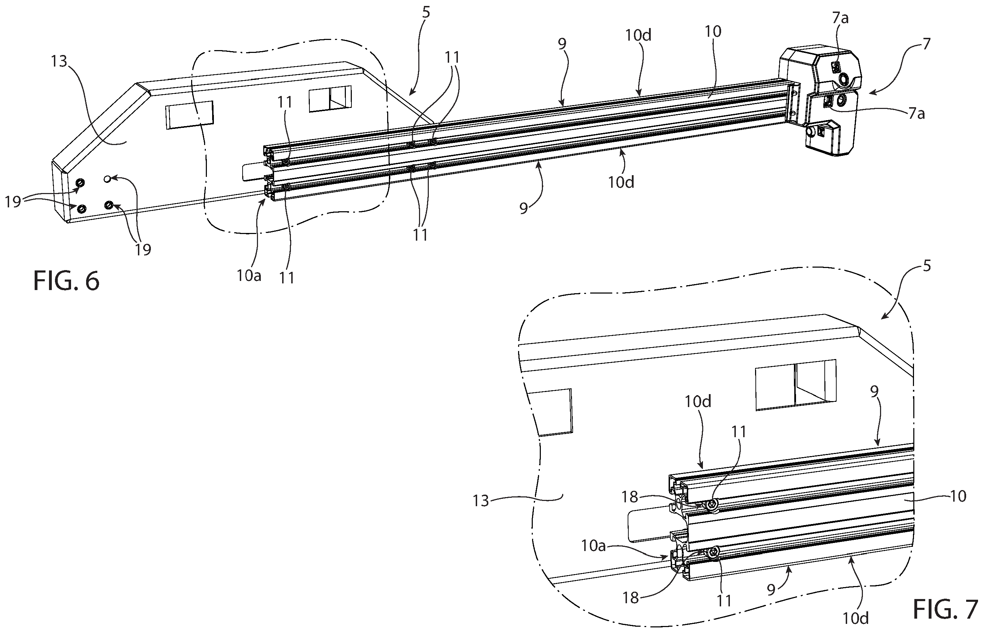

As shown in Figures 1, 2, 4 and 6, in the first operating configuration, the connecting members 11 connect the arm 10 to the support assembly 5 at two distinct fixing points. A first fixing zone Z1 is positioned approximately at the axial end 10a, and a second fixing zone Z2 is at an intermediate position 10b at a certain predetermined distance from the axial end 10a.

As shown in Figures 3 and 5 in the second operating configuration, the connecting members 11 connect the arm 10 to the support assembly 5 in the second fixing zone Z2.

In the second configuration, the arm 10 is arranged vertically, with end 10a facing base 2 and the vision unit 7 arranged on the opposite side, above the end 10a. Conveniently, the arm 10 is fixed to the support assembly 5 so that the end 10a be resting on the floor. The fact that the end 10a rests on the floor P increases the stability of the ADAS calibration apparatus 1, particularly during transport.

In the first configuration, the arm 10 is arranged horizontally and has end 10a in close proximity to end 10a of the other arm. The axial ends 10a of the two arms 10 are not shaped in such a way as to engage with one another in the first configuration. The axial ends 10a of the two arms 10 are not shaped in order to engage one another in the first configuration. In particular, the axial ends 10a of the two arms 10 are configured so as not to form a male-female mechanical engagement in the first configuration.

Each of the arms 10 is provided with at least one straight guide section 10d. The straight guide section 10d of an arm 10 is configured in order to be aligned and contiguous with the straight guide section 10d of the other arm 10 when the two arms 10 are in the first operating configuration. The two guide sections 10d of the arms 10 in the first operational configuration form the guide 9 of the bar 6. With reference to Figures 1-7, support assembly 5 comprises a plate-like body 13 which, on the side opposite column 4c, has a larger flat surface 13a on which the two arms 10 rest.

According to an embodiment, the two arms 10 may comprise metal profiles, for example made of aluminium or similar materials, and the connecting elements 11 may comprise, for example, threaded screws or bolts or the like, which are inserted into respective through-holes 18 formed in the first zone Z1 and second zone Z2 of the arms 10 and have threaded ends screwed into threaded holes 19 formed on the major surface 13a.

With reference to Figures 1 and 2, the plate-like body 13 has a substantially trapezoidal shape. The plate-like body 13 is not shaped and/or does not have any shaped portions such as to form a bar section 6.

With reference to the exemplary embodiment shown in Figures 1 and 2, the vision unit 7 may be equipped with one or more cameras 7a.

In the example shown in the attached figures, the vision unit 7 comprises at least two cameras 7a. The cameras 7a are arranged at the axial ends 10a of each arm 10 and are oriented towards the vehicle 22. The calibration device 8 may comprise, for example, a radar calibration panel. The ADAS calibration device may also comprise a camera calibration panel 24 mounted on the support assembly 5.

The ADAS calibration apparatus may be provided with a processing and control unit (not shown), which in turn comprises, for example, a computing unit or electronic processor (personal computer, laptop or similar) and is configured to control and monitor at least the operation of the devices/apparatus/units of the ADAS1 calibration device during ADAS calibration. The processing and control unit and the cameras 7a of the vision system 7 may be electrically connected to one another via wires or electrical cables (not shown). The electrical cables may conveniently pass through an internal channel in the arm profile 10.

During use, the operator positions the arms 10 vertically against the plate-like body 13 and connects them manually to the plate-like body 13, for example by tightening the bolts. In this state, the two arms 10 are arranged in the second operating configuration and the ADAS calibration apparatus 1 has a minimal horizontal footprint, allowing for convenient transport.

Upon receipt of the ADAS calibration device in the second operational configuration, the operator simply unscrews the bolts, decouples and separates the vertical arms 10 from the plate-like body 13, positions them horizontally so that they rest on the larger external surface 13a of the plate-like body, and secures them to it using the bolts, thereby assembling the bar 6 in the first operational configuration. The structure of the bar 9, formed by the two arms 10 which can be easily and removably attached to the plate-like body 13, makes the ADAS calibration device effective and convenient to use, as it reduces the horizontal footprint and makes it easier to transport.

Finally, it is clear that modifications and variations may be made to the ADAS calibration device described above without thereby falling outside the scope of the present invention.

## Claims

1. ADAS calibration apparatus (1) comprising:
a base (2) resting on the ground,
a support frame (3) which is provided with a column (4) extending along a first axis (A) substantially vertical and mounted at the bottom on the support base (2),
a support assembly (5) which is coupled to the said column (4) in order to move along the first axis (A),
a bar (6) extending along a second axis (B) approximately perpendicular to the first axis (A) and coupled to the said support assembly (5),
vision units (7) mounted on two opposite first axial ends (6a) of said bar (6),
an ADAS calibration device (8) which is coupled to the said bar (6) in order to move along the second axis (B),
the bar (6) consists of two arms (10) which are separable from one another and from the support assembly (5), and are configured in order to be manually decoupled and coupled by an operator from/to the support assembly (5) between:
a first operating configuration, in which the two arms (10) are connected to the support assembly (5) via connecting members (11) in order to be arranged coaxially with the second axis (B) and each having a second axial end (10a) adjacent to the second axial end (10a) of the other arm (10),
and
a second operating configuration, wherein the two arms (10) are connected to the support assembly (5) via the connecting members (11) on order to be arranged coaxially with the first axis (B) and each having its second axial end (10a) facing said base (2).

2. A calibration apparatus according to claim 1, wherein, in the first operating configuration, the arm (10) is fixed to the support assembly (5) at the second axial end (10a) and at an intermediate position adjacent to the second axial end (10a) by means of said connecting members (11).

3. A calibration apparatus according to claim 2, wherein, in the second operating configuration, the arm (10) is fixed to the support assembly (5) at an intermediate position adjacent to the second axial end (10a) by means of said connecting members (11) and is not connected to the support assembly at the second axial end (10a).

4. Calibration apparatus according to any of the preceding claims, wherein, in the first operating configuration, the second axial end (10a) of one arm (10) is arranged close to the second axial end (10a) of the other arm (10) without being inserted into it, or vice versa.

5. A calibration apparatus according to any of the foregoing claims, wherein the second axial end (10a) of one arm (10) has no portions shaped to be axially fitted into the support assembly (5) and/or into the second axial end (10a) of the other arm (10).

6. A calibration apparatus according to any of the preceding claims, wherein the bar (6) is without a central bar portion configured to sequentially couple said arms (10).

7. A calibration apparatus according to any of the preceding claims, wherein the transverse dimensions and cross-section of the arm (10) are constant along the entire length of the arm (10) itself.

8. A calibration apparatus according to any of the preceding claims, wherein the support assembly (5) comprises a plate-like body (13) and said arms (10) are arranged to abut against the outer surface of said plate-like body (13).

9. A calibration apparatus according to claim 8, wherein the arms (10) comprise metal profiles; the connecting members (11) comprise screws and/or threaded bolts which are inserted into respective through-holes formed in the profile of the arms (10) and have threaded ends screwed into threaded holes formed in said plate-like body (13).

10. A calibration apparatus according to claim 9, wherein the plate-like body (13) has a substantially trapezoidal shape and is not shaped and/or does not have portions shaped in such a way as to form a section of said bar (6).
